# EUROPEAN PATENT SPECIFICATION

(11) **EP 1 768 203 B1**
(45) Date of publication and mention of the grant of the patent: **05.10.2011**
(21) Application number: 06254056.2
(22) Date of filing: 02.08.2006
(51) Int. Cl.: H01M 10/052

(54) **Battery electrodes**
Batterieelektroden
Electrodes de batterie

(30) Priority: 02.08.2005 US 704796 P
(43) Date of publication of application: 28.03.2007
(73) Proprietor: Greatbatch Ltd., Clarence, NY 14031 (US)
(72) Inventor: Gan, Hong, Williamsville 14221 NY (US); Takeuchi, Esther, East Amherst 14051 NY (US)
(74) Representative: Duckett, Anthony Joseph

(56) References cited:
- EP-A- 1 089 370
- US-A- 5 856 046

## Description

### CROSS REFERENCE TO RELATED APPLICATION

This application claims priority based on provisional application Serial No. 60/704,796, filed August 2, 2005.

### BACKGROUND OF THE INVENTION

### 1. Field Of Invention

This invention relates to the conversion of chemical energy to electrical energy. In particular, the present invention relates to various new cell designs comprising a cathode having a first cathode active material of a relatively low energy density but of a relatively high rate capability contacted to one side of a current collector and with a second cathode active material having a relatively high energy density but of a relatively low rate capability in contact with the opposite side thereof. The anode comprises lithium foil devoid of an anode current collector screen or having a relatively thin strip, such as of nickel or stainless steel, serving as a lead. The present cell designs are useful in applications where a premium is placed on increased energy density, such as in power sources associated with implantable medical devices.

### 2. Prior Art

Electrochemical cells are predominantly used as the power source for implantable medical devices such as cardiac pacemakers, defibrillators, neurostimulators, drug pumps, hearing assist devices, and bone growth devices. Such implantable medical device generally comprises a housing containing circuitry for controlling functioning of the medical device and at least one electrochemical cell for powering the control circuitry. Depending on the application, the requirements on the cell's electrochemical properties, such as power capability and energy density, are very different. However, lithium-based cell systems are preferred as the power source for implantable medical device applications. Currently used ones incorporate various cathode active materials including silver vanadium oxide (SVO), carbon monfluoride (CFₓ), iodine, manganese dioxide (MnO₂), thionyl chloride, a mixture of SVO/CFₓ, and a sandwich of SVO/CFₓ/SVO.

Each of these cell systems has advantages and limitations. The SVO system is a high rate system. However, its discharge stability begins to deteriorate beginning at about 30% to 40% depth of discharge (DOD) due to the existence of voltage delay and Rdc growth. CFₓ is a very stable system; however, due to the active material's relatively low conductivity, its power capability is very limited. In addition, it has a very sharp roll off voltage profile at the end of discharge, making an accurate prediction of device end of service difficult.

A lithium/iodine cell is a high energy density system that is very stable and safe. However, its relatively low-rate capability limits applications to only very low rate devices with no advanced features, for example telemetry.

A lithium/MnO₂ cell is also very stable with reasonably high rate capability. However, this system has a relatively low energy density that translates into large cell sizes. A large cell size is unfavorable for an implantable medical device application.

A lithium/thionyl chloride cell is a liquid catholyte system that has very high energy density and rate capability. However, it experiences relatively low stability, short shelf life and high self-discharge rate.

As reported in U.S. Patent No. 5,180,642 to Weiss et al., an SVO/CFₓ cathode mixture attempts to combine the advantages of using CFₓ as a high capacity material by mixing it with a high rate cathode material, such as SVO. However, electrochemical cells made from such cathode mixtures have relatively lower rate capability and are not necessarily very useful in high rate medical device applications. Increasing the cell's theoretical capacity by using CFₓ as part of the cathode mix is in part canceled by lowering of its power capability in a high rate discharge application.

An SVO/current collector/CFₓ/current collector/SVO sandwich cathode combines the advantages of both the SVO and CFₓ systems without sacrificing either rate capability or energy density. That makes this system ideal for various implantable medical device applications. However, due to its inherent cathode structure, limitations exist with it as well. For example, this technology has relatively high material costs due to its use of two current collectors per cathode. This, in turn, leads to relatively high manufacturing costs in assembling the cathode as well as limiting efforts to reduce cell size.

Thus, there is a need to develop new electrochemical cell systems having good performance characteristics with lower manufacturing costs. The present cell systems are believed to achieve these objectives.

### SUMMARY OF THE INVENTION

Accordingly, the present invention as defined in the claims is directed to improvements in the performance of lithium electrochemical cells by providing concepts in cell design. The new cell designs are especially useful in applications where increased energy density is desired along with a predictable end of life for scheduling cell replacement procedures, such as in implantable medical device applications.

Therefore, one object of the present invention is to improve the performance of lithium cells and lower their manufacturing costs by providing new concepts in cell designs. A further object is to provide such designs in medical cells to improve their energy density and utilization efficiency and to provide high current pulse discharge capability throughout the service life of the cell while maintaining cell safety characteristics by avoiding the lithium metal dendrite formation on the anode surface.

The above objectives and others are achieved by using a cell design of; Li-[SVO/current collector/CFₓ - Li]ₙ. Either one or two layers of separator are placed between the cathode and anode assemblies and the anode is made from lithium foil devoid of an anode current collector screen. In an alternate design, the anode contains a relatively thin tab, such as a strip of nickel or stainless steel, as a lead. A relatively thin strip tab costs much less than a screen-type anode current collector.

Accordingly, these and other objects of the present invention will become increasingly more apparent to those skilled in the art by reference to the following description read in conjunction with the appended drawings.

### BRIEF DESCRIPTION OF THE DRAWINGS

Fig. 1 is perspective view, partly broken away, of an anode 10 according to the prior art.
Fig. 2 is a cross-sectional view along line 2-2 of Fig. 1.
Fig. 3 is perspective view, partly broken away, of an anode 10 according to the present invention.
Fig. 4 is a cross-sectional view along line 4-4 of Fig. 3.
Fig. 4A is an alternate embodiment of the anode 10 shown in Fig. 4.
Figs. 5 and 6 are alternate embodiments of anodes according to the present invention.

### DETAILED DESCRIPTION OF THE PREFERRED EMBODIMENTS

An electrochemical cell according to the present invention comprises an anode of lithium metal and its intermetallic compounds including, for example, Li-Si, Li-Al, Li-B, Li-Mg, and Li-Si-B alloys. The greater the amounts of the intermetallic compound such as aluminum present by weight in the alloy, however, the lower the energy density of the cell. The form of the anode may vary, but preferably the anode is a thin sheet or foil of the lithium metal.

The electrochemical cell further comprises a cathode of electrically conductive material which serves as the other electrode. The cathode is preferably of solid materials and the electrochemical reaction at the cathode involves conversion of ions which migrate from the anode to the cathode into atomic or molecular forms. The solid cathode may comprise a first active material of a carbonaceous chemistry and a second active material of a metal element, a metal oxide, a mixed metal oxide and a metal sulfide, and combinations thereof. The metal oxide, the mixed metal oxide and the metal sulfide of the second active material have a relatively lower energy density but a relatively higher rate capability than the first carbonaceous active material.

More particularly, the first active material is of a relatively high energy density and a relatively low rate capability in comparison to the second cathode active material. The first active material is preferably a carbonaceous compound prepared from carbon and fluorine, which includes graphitic and nongraphitic forms of carbon, such as coke, charcoal or activated carbon. Fluorinated carbon is represented by the formula (CFₓ)ₙ wherein x varies between about 0.1 to 1.9 and preferably between about 0.5 and 1.2, and (C₂F)ₙ, wherein n refers to the number of monomer units which can vary widely.

The cathode design further includes a second active material formed by the chemical addition, reaction, or otherwise intimate contact of various metal oxides, metal sulfides and/or metal elements, preferably during thermal treatment, sol-gel formation, chemical vapor deposition or hydrothermal synthesis in mixed states. The active materials thereby produced contain metals, oxides and sulfides of Groups IB, IIB, IIIB, IVB, VB, VIB, VIIB and VIII, which includes the noble metals and/or other oxide and sulfide compounds. A preferred second cathode active material is a reaction product of at least silver and vanadium.

One preferred mixed metal oxide is a transition metal oxide having the general formula SMₓV₂O_{y} where SM is a metal selected from Groups IB to VIIB and VIII of the Periodic Table of Elements, and wherein x is about 0.30 to 2.0 and y is about 4.5 to 6.0 in the general formula. By way of illustration, and in no way intended to be limiting, one exemplary cathode active material comprises silver vanadium oxide having the general formula AgₓV₂O_{y} in any one of its many phases, i.e., β-phase silver vanadium oxide having in the general formula x = 0.35 and y = 5.8, γ-phase silver vanadium oxide having in the general formula x = 0.80 and y = 5.40, and ε-phase silver vanadium oxide having in the general formula x = 1.0 and y = 5.5, and combination and mixtures of phases thereof. For a more detailed description of such cathode active materials reference is made to U.S. Pat. No. 4,310,609 to Liang et al., which is assigned to the assignee of the present invention and incorporated herein by reference.

Another preferred composite transition metal oxide cathode material includes V₂O_{z} wherein z ≤ 5 combined with Ag₂O having silver in either the silver(II), silver(I) or silver(0) oxidation state and CuO with copper in either the copper(II), copper(I) or copper(0) oxidation state to provide the mixed metal oxide having the general formula CuₓAg_{y}V₂O_{z}, (CSVO). Thus, the composite cathode active material may be described as a metal oxide-metal oxide-metal oxide, a metal-metal oxide-metal oxide, or a metal-metal-metal oxide and the range of material compositions found for CuₓAg_{y}V₂O_{z} is preferably about 0.01 ≤ z ≤ 6.5. Typical forms of CSVO are Cu_{0.26}Ag_{0.67}V₂O_{z} with z being about 5.5 and Cu_{0.5}Ag_{0.5}V₂O_{z} with z being about 5.75. The oxygen content is designated by z since the exact stoichiometric proportion of oxygen in CSVO can vary depending on whether the cathode material is prepared in an oxidizing atmosphere such as air or oxygen, or in an inert atmosphere such as argon, nitrogen and helium. For a more detailed description of this cathode active material reference is made to U.S. Patent Nos. 5,472,810 to Takeuchi et al. and 5,516,340 to Takeuchi et al., both of which are assigned to the assignee of the present invention and incorporated herein by reference.

In a broader sense, it is contemplated by the scope of the present invention that the first active material of the present cathode design is any material which has a relatively higher energy density but a relatively lower rate capability than the second active material. In addition to fluorinated carbon, Ag₂O, Ag₂O₂, CuF₂, Ag₂CrO₄, MnO₂ and even SVO itself are useful as the first active material, and in addition to silver vanadium oxide and copper silver vanadium oxide, V₂O₅, MnO₂, LiCoO₂, LiNiO₂, LiMn₂O₄, TiS₂, Cu₂S, FeS, FeS₂, copper oxide, copper vanadium oxide, and mixtures thereof are useful as the second active material.

Before fabrication into an electrode for incorporation into an electrochemical cell, the first and second cathode active materials prepared as described above are preferably mixed with a binder material such as a powdered fluoro-polymer, more preferably powdered polytetrafluoroethylene or powdered polyvinylidene flouride present at about 1 to about 5 weight percent of the cathode mixture. Further, up to about 10 weight percent of a conductive diluent is preferably added to the cathode mixture to improve conductivity. Suitable materials for this purpose include acetylene black, carbon black and/or graphite or a metallic powder such as powdered nickel, aluminum, titanium, and stainless steel. The preferred cathode active mixture thus includes a powdered fluoro-polymer binder present at about 3 weight percent, a conductive diluent present at about 3 weight percent and about 94 weight percent of either the first or the second cathode active materials.

Cathode components are prepared by rolling, spreading or pressing the first and second cathode active materials onto opposite sides of a suitable current collector selected from the group consisting of stainless steel, titanium, tantalum, platinum, gold, aluminum, cobalt nickel alloys, highly alloyed ferritic stainless steel containing molybdenum and chromium, and nickel-, chromium-, and molybdenum-containing alloys. The preferred current collector material is titanium, and most preferably the titanium cathode current collector has a thin layer of graphite/carbon paint applied thereto. Cathodes prepared as described above may be in the form of one or more plates operatively associated with at least one or more plates of the lithium anode material, or in the form of a strip wound with a corresponding strip of lithium in a structure similar to a "jellyroll".

In order to prevent internal short circuit conditions, the cathode is separated from the lithium anode by a suitable separator material. The separator is of electrically insulative material, and the separator material also is chemically unreactive with the anode and cathode active materials and both chemically unreactive with and insoluble in the electrolyte. In addition, the separator material has a degree of porosity sufficient to allow flow there through of the electrolyte during the electrochemical reaction of the cell. Illustrative separator materials include fabrics woven from fluoropolymeric fibers including polyvinylidine fluoride, polyethylenetetrafluoroethylene, and polyethylenechlorotrifluoroethylene used either alone or laminated with a fluoropolymeric microporous film, non-woven glass, polypropylene, polyethylene, glass fiber materials, ceramics, a polytetrafluoroethylene membrane commercially available under the designation ZITEX (Chemplast Inc.), a polypropylene membrane commercially available under the designation CELGARD (Celanese Plastic Company, Inc.) and a membrane commercially available under the designation DEXIGLAS (C.H. Dexter, Div., Dexter Corp.).

The electrochemical cell further includes a nonaqueous, ionically conductive electrolyte which serves as a medium for migration of ions between the anode and the cathode during electrochemical reactions of the cell. The electrochemical reactions at the electrodes involve conversion of ions in atomic or molecular forms which migrate from the anode to the cathode. Thus, suitable nonaqueous electrolytes are substantially inert to the anode and cathode materials, and they exhibit those physical properties necessary for ionic transport, namely, low viscosity, low surface tension and wettability.

A suitable electrolyte has an inorganic, ionically conductive salt dissolved in a nonaqueous solvent, and more preferably, the electrolyte includes an ionizable lithium salt dissolved in a mixture of aprotic organic solvents comprising a low viscosity solvent and a high permittivity solvent. Suitable lithium salts capable of serving as a vehicle for migration of lithium ions to intercalate or react with the cathode active materials include LiPF₆, LiBF₄, LiAsF₆, LiSbF₆, LiClO₄, LiO₂, LiAlCl₄, LiGaCl₄, LiC(SC)₂CF₃)₃, LiN(SO₂CF₃)₂, LiSCN, LiO₃SCF₃, LiC₆F₅SO₃, LiO₂CCF₃, LiSO₆F, LiB(C₆H₅)₄, LiCF₃SO₃, and mixtures thereof.

Low viscosity solvents useful with the present invention include esters, linear and cyclic ethers and dialkyl carbonates such as tetrahydrofuran (THF), methyl acetate (MA), diglyme, trigylme, tetragylme, dimethyl carbonate (DMC), 1,2-dimethoxyethane (DME), 1,2-diethoxyethane (DEE), 1-ethoxy,2-methoxyethane (EME), ethyl methyl carbonate, methyl propyl carbonate, ethyl propyl carbonate, diethyl carbonate, dipropyl carbonate, and mixtures thereof, and high permittivity solvents include cyclic carbonates, cyclic esters and cyclic amides such as propylene carbonate (PC), ethylene carbonate (EC), butylene carbonate, acetonitrile, dimethyl sulfoxide, dimethyl formamide, dimethyl acetamide, γ-valerolactone, γ-butyrolactone (GBL), N-methyl-pyrrolidinone (NMP), and mixtures thereof. The preferred electrolyte is 0.8M to 1.5M LiAsF₆ or LiPF₆ dissolved in a 50:50 mixture, by volume, of propylene carbonate as the preferred high permittivity solvent and 1,2-dimethoxyethane as the preferred low viscosity solvent.

According to the present invention, CFₓ cathode material, which provides a relatively low power or rate capability but a relatively high energy density or volumetric capability, and SVO cathode material, which has a relatively low energy density but a relatively high rate capability, are individually pressed on opposite sides of a current collector screen. This results in so both materials being in direct contact with the current collector. Therefore, one exemplary cathode design has the following configuration:
Design 1: SVO/current collector/CFₓ

One important aspect of the present invention is that the high rate cathode material (SVO) maintains direct contact with the current collector with the relatively low rate/high capacity material (CFₓ) being in direct contact with the high rate material. Thus, another cathode design has the following configuration:
Design 2: SVO/current collector/SVO/CFₓ

Another alternative cathode design has the following configuration:
Design 3: CFₓ/SVO/current collector/SVO/CFx

Still another cathode design has the following configuration:
Design 4: SVO/CFₓ/current collector/CFₓ/SVO

In the above cathode designs, the common structure is that they all utilize a single cathode current collector, which results in a significantly lower material cost in comparison to the sandwich cathode design of: SVO/current collector/CFₓ/current collector/SVO previously discussed with respect to U.S. Patent No. 6,551,747 to Gan. Among the above cathode configurations, designs 1 and 2 are preferred over designs 3 and 4 for maintaining high power capability in a lithium electrochemical cell.

Additionally, the present invention provides the following cell design:
anode/[separator(s)/cathode/separator(s)/anode]ₙ
wherein n ≥ 1 and the cathode has one of three structures shown above. This is different than the sandwich cell design of U.S. Patent No. 6,551,747 to Gan in which only the SVO active material faces the anode. In the present design, both the SVO and CFₓ materials face a portion of the lithium anode.

CFₓ has significantly higher volumetric capacity than that of SVO. For example, the preferred ε-phase silver vanadium oxide (AgV₂O_{5.5}) has a theoretical volumetric capacity of 1.37 Ah/ml. By comparison, the theoretical volumetric capacity of CFₓ (x = 1.1) is 2.42 Ah/ml, which is 1.77 times that of ε-phase silver vanadium oxide. In order to optimize the final cell capacity, the amount of CFₓ material should be maximized and the amount of SVO material minimized to the extent where it is still practical in engineering and acceptable in electrochemical performance. Beneficially, the use of two disparate cathode materials means that the cell's discharge voltage can be altered or profiled to the requirements of a particular application by adjusting the gram amount of SVO to that of CFₓ.

Further, end of service life indication is the same as that of a standard Li/SVO cell and of a sandwich cathode cell. And, it has been determined that the SVO and CFₓ active materials reach end of life at the same time. This is the case regardless of the use of the cell. Since both electrode materials reach end of service life at the same time, no energy capacity is wasted.

To further lower the cost of cell manufacturing, a screen-less anode design is used. For a typical lithium cell design, in order to utilize the cell volume efficiently, the relative capacity ratio of the anode vs. the cathode is designed around 1 ± 0.3. Since lithium is consumed during cell discharge, the lithium foil shrinks and part of the lithium can loss contact with the remaining lithium contacted to the anode current collector.

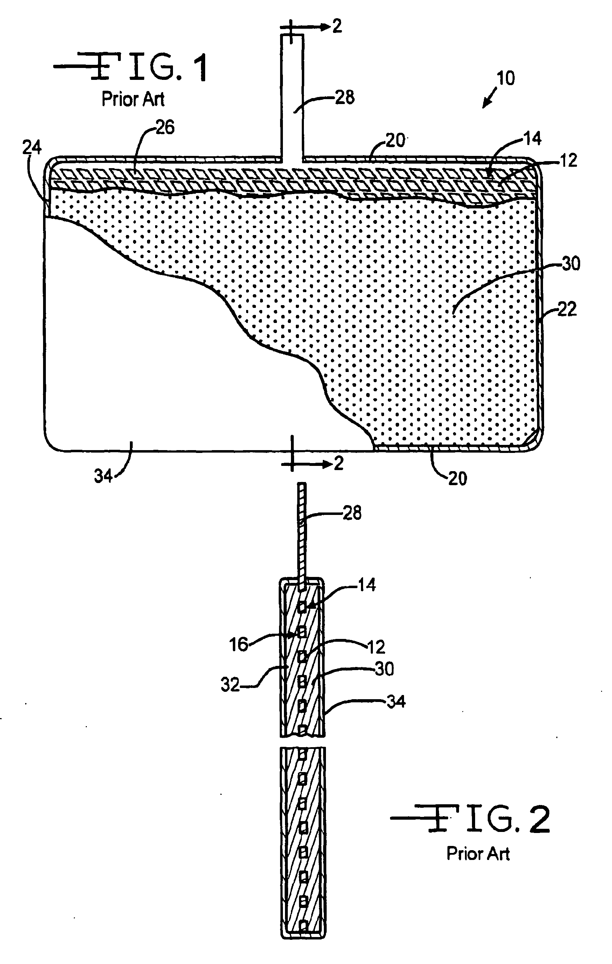

As shown in Figs. 1 and 2, a typical prior art anode 10 comprises an anode current collector 12 in the form of a screen-type structure. The current collector 12 has a front major side 14 and an opposed back major side 16, both extending to and meeting with an upper edge 18, a lower edge 20, a right edge 22 and a left edge 24. The current collector is in the form of a screen with the edges 18, 20, 22 and 24 forming a peripheral border surrounding a plurality of perforations 26 extending to the opposed major sides. The perforations 26 are shown having a diamond shape, but they can have virtually any shape and be of a density ranging from about 20% to as much as 90% of the current collector area. An integral tab 28 having a width significantly less than the distance between the right and left edges 22, 24 extends upwardly from the upper edge 16.

The anode is built by press contacting two pieces 30 and 32 of lithium metal, or alloy thereof, in sheet form to the opposed major sides 14, 16 of the current collector screen. This locks the lithium sheets 30, 32 together through the perforations 26. The lithium sheets are somewhat larger than the current collector 12 so that the peripheral border 18, 20, 22 and 24 thereof is covered and encased in the lithium. Finally, a separator 34 envelopes the lithium supported on the current collector except for the extending tab 28. The anode current collector 12 then serves as a path of electrical continuity between the lithium metal and the external circuit. Understandably, the cost of an anode having a current collector is higher than one devoid of an anode current collector.

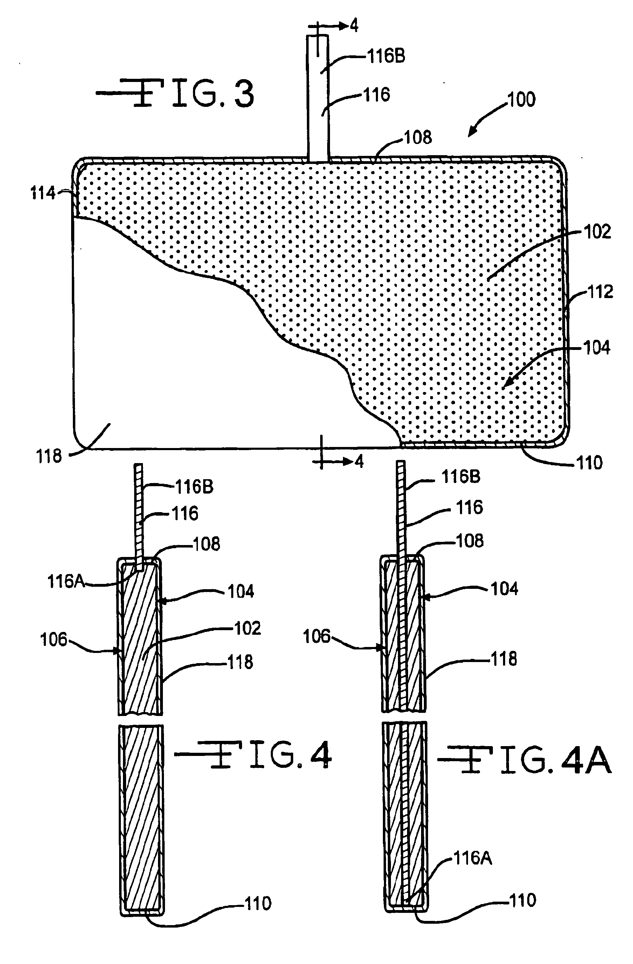

Since lithium metal is a very good electrical conductor, the need for an anode current collector can be avoided if at the end of cell discharge life, isolation of the lithium can be prevented. In that respect, another embodiment having n = 1 or n > 1 in the previously described cell configuration of: anode/[separator(s)/cathode/separator(s)/anode]ₙ uses a metal lead in place of an anode current collector screen. Figs. 3 and 4 illustrate this embodiment directed to a screen-less anode 100. The anode 100 comprises lithium metal 102, or alloy thereof, in the form of a foil having a front major side 104 and an opposed back major side 106, both extending to and meeting with an upper edge 108, a lower edge 110, a right edge 112 and a left edge 114. The lithium edges 108, 110, 112 and 114 form a peripheral border. A tab 116 in the form of a metal strip having a relatively narrow, but substantially constant width significantly less than the distance between the right and left edges 112, 114 extends upwardly from the upper edge 108 of the lithium foil 102. The tab 116 has a proximal end 116A embedded a relatively short distance into the lithium and a distal end 116B. The tab 116 is preferably centered between the front and back sides 104, 106 and serves as a path of electrical continuity between the lithium 102 and an external circuit when the distal end 116B is connected to a casing (not shown) serving as the negative cell terminal. The tab 116 could also be contacted to one or the other sides 104, 106 or off-centered instead of being centered therein. Finally, a separator 118 envelopes the lithium foil 102 except for the extending portion of the tab 116. Suitable materials for the tab 116 include nickel and stainless steel, as well as titanium, copper, tungsten, tantalum, and alloys thereof.

Preferably, the tab 116 is of a width that is from about 1% to 20% the width of the anode foil 102 measured from the right edge 112 to the left edge 114 thereof. Also, the proximal tab end 116A extends into the lithium foil 102 from about 2% (Fig. 4) to about 100% (Fig. 4A) of the distance measured from the upper edge 108 to the lower edge 110 thereof.

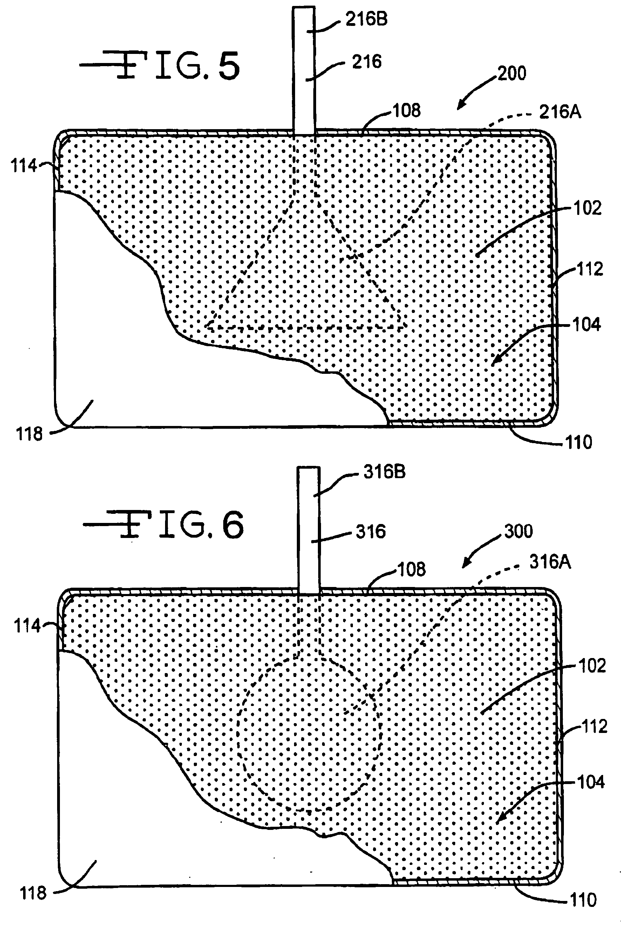

Fig. 5 illustrates an alternate embodiment of an anode 200 according to the invention. The anode comprises a tab 216 having a strip-shaped proximal end 216A and a distal end 216B. As before, the tab 216 is preferably centered between the front and back sides of the anode and serves as a path of electrical continuity between the lithium 102 and an external circuit when the distal end 216B is connected to a casing (not shown) serving as the negative cell terminal. In this embodiment, the proximal end 216A has a triangular shape while the distal end 216B is of a strip having a substantially constant width. Fig. 6 illustrates an anode 300 comprising a tab 316 having a circular-shaped proximal end 316A and a distal end 316B of a substantially constant width. Understandably, the triangular-shaped and circular-shaped proximal ends 216A, 316A for the respective tabs 216, 316 are merely illustrative of a myriad of embodiments only limited by the imagination of one skilled in the art. The important point is that the tabs 116, 216 and 316 serve as an anode current collector and are devoid of a screen-type structure.

A relatively high anode to cathode capacity ratio (A/C ratio) makes the screen-less anode 100 possible. Preferably, the anode active material to the cathode active material based on a gram amount of the active materials has an A/C ratio greater than about 1.2 to up to about 5. Due to the use of extra lithium, i.e., a relatively thicker foil, the lithium foil 102 is not totally consumed within the useful cell discharge life. The excess lithium serves as an anode current collector throughout cell discharge life. In addition, due to the presence of the excess lithium, the cell performance variation at the end of discharge, caused by a lithium "Swiss cheese" effect is eliminated. Several examples of electrode assemblies incorporating a screen-less anode are shown below:

For a single cathode design (n = 1), the lithium anode can be directly contacted to the inner surface of the cell casing. In this design, the cell case wall serves as the anode current collector and the electrode assembly has the following configuration:
case wall/lithium metal/separator/cathode/lithium metal/case wall

Similar to a lithium cell incorporating a sandwich cathode design, the energy of high volumetric capacity CFₓ material is converted into or used as high power energy of the SVO material. During high energy pulsing, both the SVO and CFₓ materials contribute to the delivered energy. The relative contribution depends on the pulse current density, as well as on the pulse length or the level of energy delivered. For short pulses, SVO provides more than 50% of the required energy. The background voltage profile is controlled by the SVO to CFₓ capacity ratio.

Compared with a sandwich SVO/CFₓ/SVO cathode design, the cell designs of the present invention have higher energy density due to the use of only one layer of cathode current collector. The comparative rate capability is slightly lower under the same cathode/anode interface area design. However, designing the cells with larger interface cathode to anode surface area compensates for this. Accordingly, the use of only one layer of cathode current collector and a screen-less anode or an anode with metal strip type current collector significantly lowers the manufacturing cost of high to medium rate lithium cells for implantable medical device applications. The concept can be used in various cell designs, including those having a prismatic or cylindrical shape incorporating an electrode assembly of a multiplate cathode with a serpentine anode, a multiplate cathode/multiplate anode, or a jellyroll electrode assembly, among others.

Cells of the present invention are particularly well suited for powering implantable medical devices requiring a relatively low to medium discharge rate. An exemplary device is a cardiac pacemaker. In such devices, it is important to have a reliable and predictable end-of-life (EOL) or end-of-replacement indicator (ERI) for the device. While Li/CFₓ cells are generally acceptable as a power source for these types of applications, this chemistry has a relatively flat or constant discharge curve until just before end of life, when it becomes somewhat steep. This makes it difficult for a medical professional to time and plan replacement surgery. In that light, in addition to augmenting the discharge performance of a CFₓ cell, the SVO component of the cathode electrode provides a predictable and familiar EOL discharge curve.

In the discharge of a cathode according to the present invention, the SVO component is the power source from about 3.6 volts through the first voltage plateau at about 3.2 volts to about 2.8 volts. At about 2.8 volts, the CFₓ component is discharged until about 2.6 volts, at which time the CFₓ material is essentially depleted. Then, the SVO material is discharged again to EOL at 2.0 volts. The discharge of a Li/SVO cell at about 2.6 volts is referred to as the second voltage plateau. In this manner, the present cathode configuration provides a cell with increased safety characteristics under short circuit conditions along with a very reliable and predictable EOL indication for replacement surgery.

The assembly of the cells described herein is preferably in the form of a wound element configuration. That is, the fabricated anode, cathode and separator are wound together in a "jellyroll" type configuration or "wound element cell stack" such that the anode is on the outside of the roll to make electrical contact with the cell case in a case-negative configuration. Using suitable top and bottom insulators, the wound cell stack is inserted into a metallic case of a suitable size dimension. The metallic case may comprise materials such as stainless steel, mild steel, nickel-plated mild steel, titanium, tantalum or aluminum, but not limited thereto, so long as the metallic material is compatible for use with components of the cell.

The cell header comprises a metallic disc-shaped body with a first hole to accommodate a glass-to-metal seal/terminal pin feedthrough and a second hole for electrolyte filling. The glass used is of a corrosion resistant type having up to about 50% by weight silicon such as CABAL 12, TA 23, FUSITE 425 or FUSITE 435. The positive terminal pin feedthrough preferably comprises titanium although molybdenum, aluminum, nickel alloy, or stainless steel can also be used. The cell header is typically of a material similar to that of the case. The positive terminal pin supported in the glass-to-metal seal is, in turn, supported by the header, which is welded to the case containing the electrode stack. The cell is thereafter filled with the electrolyte solution described hereinabove and hermetically sealed such as by close-welding a stainless steel ball over the fill hole, but not limited thereto.

The above assembly describes a case-negative cell, which is the preferred construction of present invention cells. As is well known to those skilled in the art, however, the exemplary cells can also be constructed in case-positive configurations.

## Claims

1. An electrochemical cell, which comprises:
a) a casing;
b) an anode comprising a body of lithium as an anode active material contacted to an anode current collector devoid of a screen-type structure;
c) a cathode of a cathode active material;
d) a separator disposed between the anode and the cathode to prevent direct physical contact between them; and
e) a nonaqueous electrolyte activating the anode and the cathode housed inside the casing;
wherein the anode current collector is a strip of metal having a length extending to a proximal end and a distal end with its proximal end contacted by the lithium body and its distal end electrically connected to an anode terminal; the lithium body has an upper edge and a spaced apart lower edge, both extending to and meeting with right and left edges defining an anode width; a width of the metal strip is from about 1% to 20% the anode width measured from the right edge to the left edge thereof; and the metal strip extends into the lithium body from about 2% to about 100% of its height measured from the upper edge to the lower edge thereof.

2. The electrochemical cell of claim 1 wherein the lithium body is not in contact with a casing sidewall.

3. The electrochemical cell of claim 1 or 2 wherein the metal strip has a generally uniform width along its length from the proximal end to the distal end thereof.

4. The electrochemical cell of any of claims 1 to 3 wherein the metal strip has either a triangular- or a circular-shaped proximal end.

5. The electrochemical cell of any of claims 1 to 4 wherein the casing is the anode terminal.

6. The electrochemical cell of any of claims 1 to 5 wherein the lithium is provided in an anode to cathode capacity ratio (A/C ratio) greater than about 1.2 based on a gram amount of the anode active material to the cathode active material.

7. The electrochemical cell of claim 6 wherein A/C ratio is up to about 5.

8. The electrochemical cell of any of claims 1 to 7 wherein the cathode active material is selected from the group consisting of silver vanadium oxide (SVO), copper silver vanadium oxide (CSVO), V₂O₅, MnO₂, CuO₂ TiS₂, Cu₂S, FeS, FeS₂, copper vanadium oxide, CFₓ, Ag₂O, Ag₂O₂, CuF, LiCoO₂, LiNiO₂, LiMnO₂, Ag₂CrO₄, and mixtures thereof.

9. An electrochemical cell according to claim 1, wherein the cathode is of a first cathode active material having a relatively low energy density but a relatively high rate capability contacted to one side of a cathode current collector and with a second cathode active material having a relatively high energy density but a relatively low rate capability contacted to the other side of the cathode current collector, wherein the lithium is provided in an anode to cathode capacity ratio (A/C ratio) greater than about 1.2 based on a gram amount of the anode active material to the total gram amounts of the first and second cathode active materials.

10. The electrochemical cell of claim 9 wherein the second cathode active material faces the anode.

11. The electrochemical cell of claim 9 or 10 wherein the lithium body is not in contact with a casing sidewall.

12. The electrochemical cell of any of claims 9 to 11 wherein A/C ratio is up to about 5.

13. The electrochemical cell of any of claims 9 to 12 wherein the anode and cathode are electrochemically associated with each other in a configuration of: anode/[separator/cathode/separator/anode]ₙ, wherein n ≥ 1.

14. The electrochemical cell of any of claims 9 to 13 wherein a casing sidewall serves as the anode current collector for an electrode assembly having a configuration of: casing sidewall/lithium/separator/cathode/lithium/casing sidewall.

15. The electrochemical cell of any of claims 9 to 14 wherein the first cathode active material is selected from the group consisting of silver vanadium oxide (SVO), copper silver vanadium oxide (CSVO), V₂O₅, MnO₂, LiCoO₂, LiNiO₂, LiMnO₂, CuO₂, TiS₂, Cu₂S, FeS, FeS₂, copper oxide, copper vanadium oxide, and mixtures thereof, and the second cathode active material is selected from the group consisting of CFₓ, Ag₂O, Ag₂O₂, CuF, Ag₂CrO₄, MnO₂, SVO, and mixtures thereof.

16. The electrochemical cell of any of claims 9 to 15 wherein the cathode has the configuration: SVO/current collector/CFₓ, with the CFₓ facing the anode.

17. The electrochemical cell of any of claims 9 to 15 wherein the cathode has the configuration: SVO/current collector/SVO/CFₓ, with the CFₓ facing the anode.

18. The electrochemical cell of any of claims 9 to 15 wherein the cathode has the configuration: CFₓ/SVO/current collector/SVO/CFₓ.

19. An electrochemical cell according to claim 1, wherein the lithium body is not in contact with a casing sidewall; and wherein the cathode is of SVO as a first cathode active material contacting one side of a cathode current collector and CFₓ as a second cathode active material contacting the opposite side of the cathode current collector and facing the anode, wherein the cathode is provided in a configuration selected from the group consisting of:
i) SVO/current collector/CFₓ;
ii) SVO/current collector/SVO/CFₓ;
iii) CFₓ/SVO/current collector/SVO/CFₓ; and
iv) SVO/CFₓ/current collector/CFₓ/SVO.

20. The electrochemical cell of claim 19 wherein the cathode current collector is selected from the group consisting of stainless steel, titanium, tantalum, platinum, gold, aluminum, cobalt nickel alloys, highly alloyed ferritic stainless steel containing molybdenum and chromium, and nickel-, chromium-, and molybdenum-containing alloys.

21. The electrochemical cell of claim 19 or 20 wherein the cathode current collector is titanium having a coating selected from the group consisting of graphite/carbon material, iridium, iridium oxide and platinum provided thereon.

22. The electrochemical cell of any of claims 19 to 21 wherein the electrolyte has a first solvent selected from the group consisting of tetrahydrofuran, methyl acetate, diglyme, triglyme, tetraglyme, dimethyl carbonate, 1,2-dimethoxyethane, 1,2-diethoxyethane, 1-ethoxy-2-methoxyethane, ethyl methyl carbonate, methyl propyl carbonate, ethyl propyl carbonate, diethyl carbonate, dipropyl carbonate, and mixtures thereof, and a second solvent selected from the group consisting of propylene carbonate, ethylene carbonate, butylene carbonate, acetonitrile, dimethyl sulfoxide, dimethyl formamide, dimethyl acetamide, γ-valerolactone, γ-butyrolactone, N-methylpyrrolidinone, and mixtures thereof.

23. The electrochemical cell of any of claims 19 to 22 wherein the electrolyte includes a lithium salt selected from the group consisting of LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆F₅SO₃, LiO₂CCF₃, LiSO₆F, LiB(C₆H₅)₄, LiCF₃SO₃, and mixtures thereof.

24. An implantable medical device, which comprises:
a) a housing;
b) a control circuitry contained inside the housing to control functioning of the medical device; and
c) an electrochemical cell contained inside the housing for powering the control circuitry, the cell comprising:
i) a casing;
ii) an anode comprising a body of lithium as an anode active material contacted to an anode current collector devoid of a screen-type structure and wherein the lithium body is not in contact with a casing sidewall;
iii) a cathode of a first cathode active material having a relatively low energy density but a relatively high rate capability contacted to one side of a cathode current collector with a second cathode active material having a relatively high energy density but a relatively low rate capability contacting the opposite side of the cathode current collector, and wherein the second cathode active material faces the anode; and
iv) a nonaqueous electrolyte activating the anode and the cathode housed inside the casing;
wherein the anode current collector is a strip of metal having a length extending to a proximal end and a distal end with its proximal end contacted by the lithium body and its distal end electrically connected to an anode terminal; the lithium body has an upper edge and a spaced apart lower edge, both extending to and meeting with right and left edges defining an anode width; a width of the metal strip is from about 1% to 20% the anode width measured from the right edge to the left edge thereof; and the metal strip extends into the lithium body from about 2% to about 100% of its height measured from the upper edge to the lower edge thereof.

25. The medical device of claim 24 wherein the first cathode active material is selected from the group consisting of SVO, CSVO, V₂O₅, MnO₂, LiCoO₂, LiNiO₂, LiMnO₂, CuO₂, TiS₂, Cu₂S, FeS, FeS₂, copper oxide, copper vanadium oxide, and mixtures thereof.

26. The medical device of claim 24 or 25 wherein the second cathode active material is selected from the group consisting of CFₓ, Ag₂O, Ag₂O₂, CuF, Ag₂CrO₄, MnO₂, and mixtures thereof.

27. The medical device of any of claims 24 to 26 wherein the cathode has a configuration selected from the group consisting of: SVO/current collector/CFₓ, SVO/current collector/SVO/CFₓ, and CFₓ/SVO/current collector/SVO/CFₓ, with the CFₓ facing the lithium anode.

28. The medical device of any of claims 24 to 27 selected from the group consisting of a cardiac pacemaker, a defibrillator, a neurostimulator, a drug pump, a hearing assist device, and a bone growth device.

29. A method for providing an electrochemical cell, comprising the steps of:
a) providing a casing;
b) providing an anode comprising a body of lithium as an anode active material contacted to an anode current collector devoid of a screen-type structure;
c) providing a cathode of a cathode active material;
d) disposing a separator between the anode and the cathode to prevent direct physical contact between them; and
e) activating the anode and the cathode housed inside the casing with a nonaqueous electrolyte and with the lithium body not contacting a casing sidewall;
wherein the anode current collector is a strip of metal having a length extending to a proximal end and a distal end with its proximal end contacted by the lithium body and its distal end electrically connected to an anode terminal; the lithium body has an upper edge and a spaced apart lower edge, both extending to and meeting with right and left edges defining an anode width; a width of the metal strip is from about 1% to 20% the anode width measured from the right edge to the left edge thereof; and the metal strip extends into the lithium body from about 2% to about 100% of its height measured from the upper edge to the lower edge thereof.

30. The method of claim 29 including providing the anode current collector as a strip of metal having a length extending to a proximal and a distal end and contacting the proximal strip end to the lithium body and electrically connecting the distal strip end to the casing serving as an anode terminal.

31. The method of claim 29 or 30 including providing the lithium in an anode to cathode capacity ratio (A/C ratio) greater than about 1.2 based on a gram amount of the anode active material to the cathode active material.

32. The method of any of claims 29 to 31 including selecting the cathode active material from the group consisting of silver vanadium oxide (SVO), copper silver vanadium oxide (CSVO), V₂O₅, MnO₂, CuO₂, TiS₂, Cu₂S, FeS, FeS₂, copper vanadium oxide, CFₓ, Ag₂O, Ag₂O₂, CuF, LiCoO₂, LiNiO₂, LiMnO₂, Ag₂CrO₄, and mixtures thereof.

33. A method for providing an electrochemical cell, comprising the steps of:
a) providing a casing;
b) providing an anode comprising lithium as an anode active material contacted to an anode current collector devoid of a screen-type structure;
c) providing a cathode by contacting a first cathode active material having a relatively low energy density but a relatively high rate capability to one side of a cathode current collector and a second cathode active material having a relatively high energy density but a relatively low rate capability to the other side of the cathode current collector, and further providing the lithium in an anode to cathode capacity ratio (A/C ratio) greater than about 1.2 up to about 5 based on a gram amount of the anode active material to the total gram amounts of the first and second cathode active materials;
d) disposing a separator between the anode and the cathode to prevent direct physical contact between them; and
e) activating the anode and the cathode housed inside the casing with a nonaqueous electrolyte;
wherein the anode current collector is a strip of metal having a length extending to a proximal end and a distal end with its proximal end contacted by the lithium body and its distal end electrically connected to an anode terminal; the lithium body has an upper edge and a spaced apart lower edge, both extending to and meeting with right and left edges defining an anode width; a width of the metal strip is from about 1% to 20% the anode width measured from the right edge to the left edge thereof; and the metal strip extends into the lithium body from about 2% to about 100% of its height measured from the upper edge to the lower edge thereof.

34. The method of claim 33 including electrically associating the anode and cathode with each other in a configuration of: anode/[separator/cathode/separator/anode]ₙ, wherein n ≥ 1.

35. A method according to claim 29 including providing the cathode by contacting SVO as a first cathode active material to one side of a cathode current collector and CFₓ as a second cathode active material to the opposite side of the cathode current collector and facing the anode, wherein the cathode is provided in a configuration selected from the group consisting of:
i) SVO/current collector/CFₓ;
ii) SVO/current collector/SVO/CFₓ;
iii) CFₓ/SVO/current collector/SVO/CFₓ; and
iv) SVO/CFₓ/current collector/CFₓ/SVO.

## Patentansprüche

1. Elektrochemische Zelle, welche umfasst:
a) ein Gehäuse;
b) eine Anode umfassend einen Körper aus Lithium als ein anodenaktives Material, welches einen Anodenstromkollektor ohne Siebtypstruktur (screen-typ) kontaktiert;
c) eine Kathode aus einem kathodenaktiven Material;
d) einen zwischen der Anode und der Kathode angeordneten Separator, um einen direkten physikalischen Kontakt zwischen ihnen zu verhindern; und
e) einen nicht wässrigen Elektrolyt, welcher die Anode und die innerhalb des Gehäuses angeordnete Kathode aktiviert,
wobei der Anodenstromkollektor ein Streifen aus Metall ist, welcher eine sich zu einem proximalen Ende und zu einem distalen Ende erstreckende Länge aufweist, wobei dessen proximales Ende durch den Lithiumkörper kontaktiert wird und dessen distales Ende elektrisch mit einem Anodenanschluss verbunden ist;
der Lithiumkörper eine obere Kante und eine davon beabstandete untere Kante aufweist, wobei beide sich erstrecken zu und zusammentreffen mit eine Anodenbreite definierenden rechten und linken Kanten,
eine Breite des Metallstreifens etwa von 1% bis 20% der Anodenbreite, gemessen von der rechten Kante zu der linken Kante davon, ist; und
der Metallstreifen sich in dem Lithiumkörper von etwa 2% bis etwa 100% von dessen Höhe, gemessen von der oberen Kante zu der unteren Kante davon, erstreckt.

2. Elektrochemische Zelle gemäß Anspruch 1,
wobei der Lithiumkörper nicht mit einer Gehäuseseitenwand in Kontakt ist.

3. Elektrochemische Zelle gemäß Anspruch 1 oder 2,
wobei der Metallstreifen eine allgemeine gleichmäßige Breite entlang seiner Länge von dem proximalen Ende zu dem distalen Ende aufweist.

4. Elektrochemische Zelle gemäß einem der Ansprüche 1 bis 3,
wobei der Metallstreifen entweder ein dreieck- oder ein kreisförmiges proximales Ende aufweist.

5. Elektrochemische Zelle gemäß einem der Ansprüche 1 bis 4,
wobei das Gehäuse der Anodenanschluss ist.

6. Elektrochemische Zelle gemäß einem der Ansprüche 1 bis 5, wobei das Lithium in einem Anode-zu-Kathode-Kapazitätsverhältnis (A/C-Verhältnis) von größer als etwa 1,2 bezogen auf ein Gramm der Menge des anodenaktiven Materials zu dem kathodenaktiven Material zur Verfügung gestellt wird.

7. Elektrochemische Zelle gemäß Anspruch 6, wobei das A/C-Verhältnis bis etwa 5 ist.

8. Elektrochemische Zelle gemäß einem der Ansprüche 1 bis 7, wobei das kathodenaktive Material ausgewählt ist aus der Gruppe bestehend aus Silbervanadiumoxid (SVO), Kupfersilbervanadiumoxid (CSVO), V₂O₅, MnO₂, CuO₂, TiS₂, Cu₂S, FeS, FeS₂, Kupfervanadiumoxid, CFₓ, Ag₂O, Ag₂O₂, CuF, LiCoO₂, LiNiO₂, LiMnO₂, Ag₂CrO₄ und Mischungen daraus.

9. Elektrochemische Zelle gemäß Anspruch 1, wobei die Kathode aus einem ersten kathodenaktiven Material ist, welches eine relativ geringe Energiedichte, jedoch eine relativ hohe Ratenkapazität, welches eine Seite eines Kathodenstromkollektors berührt, aufweist und mit einem zweiten kathodenaktiven Material, welches eine relativ hohe Energiedichte, jedoch eine relativ geringe Ratenkapazität aufweist, welches die andere Seite des Kathodenstromkollektors berührt, wobei das Lithium in einem Anode-zu-Kathode-Kapazitätsverhältnis (A/C-Verhältnis) von größer als etwa 1.2 bezogen auf ein Gramm Menge des anodenaktiven Materials zu den Gesamtgrammmengen des ersten und zweiten kathodenaktiven Materials zur Verfügung gestellt wird.

10. Elektrochemische Zelle gemäß Anspruch 9, wobei das zweite kathodenaktive Material der Anode gegenüberliegt.

11. Elektrochemische Zelle gemäß einem der Ansprüche 9 oder 10, wobei der Lithiumkörper nicht mit der Gehäuseseitenwand in Kontakt ist.

12. Elektrochemische Zelle gemäß einem der Ansprüche 9 bis 11, wobei das A/C-Verhältnis bis etwa 5 ist.

13. Elektrochemische Zelle gemäß einem der Ansprüche 9 bis 12, wobei die Anode und Kathode elektrochemisch in einer Konfiguration von:
Anode/[Separator/Kathode/Separator/Anode]ₙ, wobei n ≥ 1 ist, miteinander verbunden sind.

14. Elektrochemische Zelle gemäß einem der Ansprüche 9 bis 13, wobei eine Gehäuseseitenwand als der Anodenstromkollektor für einen Elektrodenaufbau, welcher eine Konfiguration von:
Gehäuseseitenwand/Lithium/Separator/Kathode/Lithium/Gehäuseseitenwand aufweist, dient.

15. Elektrochemische Zelle gemäß einem der Ansprüche 9 bis 14, wobei das erste kathodenaktive Material ausgewählt ist aus der Gruppe bestehend aus Silbervanadiumoxid (SVO), Kupfersilbervanadiumoxid (CSVO), V₂O₂, MnO₂, LiCoO₂, LiNiO₂, LiMnO₂, CuO₂, TiS₂, Cu₂S, FeS, FeS₂, Kupferoxid, Kupfervanadiumoxid und einer Mischung daraus, und das zweite kathodenaktive Material ausgewählt ist aus der Gruppe bestehend aus CFₓ, Ag₂O, Ag₂O₂, CuF, Ag₂CrO₄, MnO₂, SVO und Mischungen daraus.

16. Elektrochemische Zelle gemäß einem der Ansprüche 9 bis 15, wobei die Kathode die Konfiguration: SVO/Stromkollektor/CFₓ mit dem der Anode gegenüberliegenden CFₓ aufweist.

17. Elektrochemische Zelle gemäß einem der Ansprüche 9 bis 15, wobei die Kathode die Konfiguration: SVO/Stromkollektor/SVO/CFₓ mit dem der Anode gegenüberliegenden CFₓ aufweist.

18. Elektrochemische Zelle gemäß einem der Ansprüche 9 bis 15, wobei die Kathode die Konfiguration: CFₓ/SVO/Stromkollektor/SVO/CFₓ aufweist.

19. Elektrochemische Zelle gemäß Anspruch 1, wobei der Lithiumkörper nicht in Kontakt mit einer Gehäuseseitenwand ist, und wobei die Kathode aus SVO als ein erstes kathodenaktives Material ist, welches eine Seite eines Kathodenstromkollektors kontaktiert und CFₓ als ein zweites kathodenaktives Material die gegenüberliegende Seite des Kathodenstromkollektors kontaktiert und der Anode gegenüberliegt, wobei die Kathode in einer Konfiguration ausgewählt aus der Gruppe bestehend aus:
I) SVO/Stromkollektor/CFₓ;
II) SVO/Stromkollektor/SVO/CFₓ;
III) CFₓ/SVO/Stromkollektor/SVO/CFₓ; und
IV) SVO/CFₓ/Stromkollektor/CFₓ/SVO
zur Verfügung steht.

20. Elektrochemische Zelle gemäß Anspruch 19, wobei der Kathodenstromkollektor aus der Gruppe bestehend aus rostfreiem Stahl, Titan, Tantal, Platin, Gold, Aluminium, Kobaltnickelmetalllegierungen, hochlegiertem ferritischen rostfreien Stahl enthaltend Molygden und Chrom und nickel-, chrom- und molygdenenthaltenen Metalllegierungen ausgewählt ist.

21. Elektrochemische Zelle gemäß Anspruch 19 oder 20, wobei der Kathodenstromkollektor Titan ist, welches eine Beschichtung ausgewählt aus der Gruppe bestehend aus Graphit/Kohlenstoffmaterial, Iridium, Iridiumoxid und darauf angeordnetem Platin aufweist.

22. Elektrochemische Zelle gemäß einem der Ansprüche 19 bis 21, wobei das Elektrolyt ein erstes Lösungsmittel ausgewählt aus der Gruppe bestehend aus Tetrahydroforan, Methylacetat, Di-Glyme, Tri-Glyme, Tetra-Glyme, Di-Methylcarbonat, 1,2-Dimetoxyethan, 1,2-Dietoxyethan, 1-Ethroxy-2-Methoxyethan, Ethylmethylcarbonat, Methylpropylcarbonat, Ethylpropylcarbonat, Di-Ethylcarbonat, Di-Propylcarbonat und Mischungen daraus und ein zweites Lösungsmittel ausgewählt aus der Gruppe bestehend aus Propylencarbonat, Ethylencarbonat, Buthylencarbonat, Acetonnitril, Di-Methylsulfoxid, Di-Methylformamid, Di-Methylacetamid, Y-Valerolacton, Y-Butyrolacton, N-Methyl-Pyrrolidinon und Mischungen daraus aufweist.

23. Elektrochemische Zelle gemäß einem der Ansprüche 19 bis 22, wobei das Elektrolyt ein Lithiumsalz ausgewählt aus der Gruppe bestehend aus LiPF₆, LiBF₄, LiAsF₆, LiSbF₆, LiClO₄, LiO₂, LiAlCl₄, LiGaCl₄, LiC(So₂CF₃)₃, LiN(SO₂CF₃)₂, LiSCN, LiO₃SCF₃, LiC₆F₅SO₃, LiO₂CCF₃, LiSO₆F, LiB(C₆H₅)₄, LiCF₃So₃ und Mischungen daraus beinhaltet.

24. Implantierbares medizinisches Gerät, welches umfasst:
a) ein Gehäuse;
b) eine innerhalb des Gehäuses enthaltene Steuerungsschaltung zum Kontrollieren der Funktionen des medizinischen Gerätes; und
c) eine innerhalb des Gehäuses enthaltene elektrochemische Zelle zum Antrieb der Steuerungsschaltung, die Zelle umfassend:
I) ein Gehäuse;
II) eine Anode umfassend einen Körper aus Lithium als ein anodenaktives Material, welches einen Anodenstromkollektor ohne eine Siebtypstruktur (screen-typ) kontaktiert, und wobei der Lithiumkörper nicht in Kontakt mit einer Gehäuseseitenwand ist,
III) eine Kathode aus einem ersten kathodenaktiven Material, welches eine relativ geringe Energiedichte, aber eine relativ hohe Ratenkapazität aufweist, welches eine Seite des Kathodenstromkollektors kontaktiert, mit einem zweiten kathodenaktiven Material, welches eine relativ hohe Energiedichte, aber eine relativ geringe Ratenkapazität aufweist, die die gegenüberliegende Seite des Kathodenstromkollektors kontaktiert, und wobei das zweite kathodenaktive Material der Anode gegenüberliegt; und
IV) einen nicht wässrigen Elektrolyt, welcher die Anode und die innerhalb des Gehäuses angeordnete Kathode aktiviert;
und wobei der Anodenstromkollektor ein Streifen aus Metall ist, welcher eine sich zu einem proximalen Ende und einem distalen Ende erstreckende Länge aufweist, wobei dessen proximales Ende durch den Lithiumkörper kontaktiert wird und dessen distales Ende mit einem Anodenanschluss elektrisch verbunden ist; der Lithiumkörper eine obere Kante und eine davon beabstandete untere Kante aufweist, wobei sich beide erstrecken zu und zusammentreffen mit eine Anodenbreite definierenden rechten und linken Kanten, eine Breite des Metallstreifens von etwa 1% - 20 % der Anodenbreite, gemessen von der rechten Kante zu der linken Kante davon, ist; und der Metallstreifen sich in dem Lithiumkörper von etwa 2% bis etwa 100% von dessen Höhe, gemessen von der oberen Kante zu der unteren Kante davon, erstreckt.

25. Medizinisches Gerät gemäß Anspruch 24, wobei das erste kathodenaktive Material ausgewählt ist aus der Gruppe bestehend aus SVO, CSVO, V₂O₅, MnO₂, LiCoO₂, LiNlO₂, LiMnO₂, CuO₂, TiS₂, Cu₂S, FeS, FeS₂, Kupferoxid, Kupfervanadiumoxid und Mischungen daraus.

26. Medizinisches Gerät gemäß Anspruch 24 oder 25, wobei das zweite kathodenaktive Material ausgewählt ist aus der Gruppe bestehend aus CFₓ, Ag₂O, Ag₂O₂, CuF, Ag₂CrO₄, MnO₂ und Mischungen daraus.

27. Medizinisches Gerät gemäß einem der Ansprüche 24 bis 26, wobei die Kathode eine Konfiguration ausgewählt aus der Gruppe bestehend aus:
SVO/Stromkollektor/CFₓ,
SVO/Stromkollektor/SVO/CFₓ; und
CFₓ/SVO/Stromkoiiektor/SVO/CFₓ mit dem der Lithiumanode gegenüberliegenden CFₓ, aufweist.

28. Medizinisches Gerät gemäß einem der Ansprüche 24 bis 27 ausgewählt aus der Gruppe bestehend aus einem Herzschrittmacher, einem Defibrillator, einem Neurostimulator, einer Medikamentenpumpe, einem Hörgerät und einem Knochenwachstumsgerät.

29. Verfahren zum Bereitstellen einer elektrochemischen Zelle, umfassend die Schritte:
a) Bereitstellen eines Gehäuses;
b) Bereitstellen einer Anode umfassend einen Körper aus Lithium als ein anodenaktives Material, welches einen Anodenstromkollektor ohne Siebtypstruktur (screen-typ) kontaktiert;
c) Bereitstellen einer Kathode aus einem kathodenaktivem Material;
d) Anordnen eines Separators zwischen der Anode und der Kathode, um direkten physikalischen Kontakt zwischen diesen zu verhindern; und
e) Aktivieren der Anode und der innerhalb des Gehäuses angeordneten Kathode mit einem nichtwässrigen Elektrolyt und mit dem eine Gehäuseseitenwand nicht kontaktierenden Lithiumkörper; wobei der Anodenstromkollektor ein Streifen aus Metall ist, welcher eine sich zu einem proximalen Ende und einem distalen Ende erstreckende Länge, aufweist, wobei dessen proximales Ende durch den Lithiumkörper kontaktiert wird und dessen distales Ende mit einem Anodenanschluss elektrisch verbunden ist; der Lithiumkörper eine obere Kante und eine davon beabstandete untere Kante aufweist, wobei sich beide erstrecken zu und zusammentreffen mit eine Anodenbreite definierenden rechten und linken Kanten; eine Breite des Metallstreifens von etwa 1% bis 20% der Anodenbreite, gemessen von der rechten Kante zu der linken Kante davon, ist; und der Metallstreifen sich in dem Lithiumkörper von etwa 2% bis etwa 100% von dessen Höhe, gemessen von der oberen Kante zu der unteren Kante davon, erstreckt.

30. Verfahren gemäß Anspruch 29 beinhaltend:
Bereitstellen des Anodenstromkollektors als ein Streifen aus Metall, welcher eine sich zu einem proximalen Ende und einem distalen Ende erstreckende Länge aufweist und Kontaktieren des proximalen Streifenendes mit dem Lithiumkörper und elektrisches Verbinden des distalen Streifenendes mit dem als Anodenanschluss dienenden Gehäuse.

31. Verfahren gemäß Anspruch 29 oder 30 beinhaltend:
Bereitstellen des Lithiums in einem Anode-zu-Kathode-Kapazitätsverhältnis (A/C-Verhältnis) von größer als 1,2 bezogen auf ein Gramm Menge des anodenaktiven Materials zu dem kathodenaktiven Material.

32. Verfahren gemäß einem der Ansprüche 29 bis 31 beinhaltend:
Auswählen des kathodenaktiven Materials aus der Gruppe bestehend aus Silbervanadiumoxid (SVO), Kupfersilbervanadiumoxid (CSVO), V₂O₅, MnO₂, CuO₂, TiS₂, Cu₂S, FeS, FeS₂, Kupfervanadiumoxid, CFₓ, Ag₂O, Ag₂O₂, CuF, LiCoO₂, LiNiO₂, LiMnO₂, Ag₂CrO₄ und Mischungen daraus.

33. Verfahren zur Bereitstellung einer elektrochemischen Zelle, umfassend die Schritte:
a) Bereitstellen eines Gehäuses;
b) Bereitstellen einer Anode umfassend Lithium als anodenaktives Material, welches ein Anodenstromkollektor ohne Siebtypstruktur (screen-typ) kontaktiert;
c) Bereitstellen einer Kathode durch Kontaktieren eines ersten kathodenaktiven Materials, welches eine relativ geringe Energiedichte, aber eine relativ hohe Raten-kapazität aufweist zu einer Seite des Kathodenstromkollektors und ein zweites kathodenaktives Material, welches eine relativ hohe Energiedichte, aber eine relativ geringe Ratenkapazität aufweist zu der anderen Seite des Kathodenstromkollektors, und weiterhin Bereitstellen des Lithium in einem Anode-zu-Kathode-Kapazitätsvehältnis (A/C-Verhältnis) von größer als 1.2 bis etwa 5 bezogen auf ein Gramm Menge des anodenaktiven Materials zu den Gesamtgrammmengen des ersten und zweiten kathodenaktiven Materials;
d) Anordnen eines Separators zwischen der Anode und der Kathode, um direkten physikalischen Kontakt zwischen ihnen zu verhindern; und
e) Aktivieren der Anode und der innerhalb des Gehäuses angeordneten Kathode mit einem nichtwässrigen Elektolyt;
wobei der Anodenstromkollektor ein Streifen aus Metall ist, welcher eine sich zu einem proximalen Ende und einem distalen Ende erstreckende Länge aufweist, wobei dessen proximales Ende durch den Lithiumkörper kontaktiert wird und dessen distales Ende mit einem Anodenanschluss verbunden ist; der Lithiumkörper eine obere Kante und eine davon beabstandete untere Kante aufweist, wobei sich beide erstrecken zu und zusammentreffen mit eine Anodenbreite definierenden rechten und linken Kanten; eine Breite des Metallstreifens von etwa 1 % bis 20% der Anodenbreite, gemessen von der rechten Kante zu der linken Kante davon, ist; und der Metallstreifen sich in dem Lithiumkörper von etwa 2% bis etwa 100% von dessen Höhe, gemessen von der oberen Kante zu der unteren Kante davon, erstreckt.

34. Verfahren gemäß Anspruch 33 beinhaltend:
Elektrische Verbindung der Anode und Kathode miteinander in einer Konfiguration aus: Anode/[Separator/Kathode/Separator/Anode]ₙ, wobei n ≥1 ist.

35. Verfahren gemäß Anspruch 29 beinhaltend:
Bereitstellen der Kathode durch Kontaktieren SVO als ein erstes kathodenaktives Material mit einer Seite eines Kathodenstromkollektors und CFₓ als zweites kathodenaktives Material mit der gegenüberliegenden Seite des Kathodenstromkollektors und Gegenüberliegen der Anode, wobei die Kathode in einer Konfiguration ausgewählt aus der Gruppe bestehend aus:
I) SVO/Stomkollektor/CFₓ;
II) SVO/Stomkollektor/SVO/CFₓ;
III) CFₓ/SVO/Stromkollektor/SVO/CFₓ; und
IV) SVO/CFₓ/Stromkollektor/CFₓ/SVO
bereitgestellt ist.

## Revendications

1. Cellule électrochimique, qui comprend :
a) un boîtier ;
b) une anode comprenant un corps de lithium comme matériau d'anode actif en contact avec un collecteur de courant d'anode dépourvu d'une structure de type écran ;
c) une cathode d'un matériau de cathode actif ;
d) un séparateur disposé entre l'anode et la cathode pour empêcher un contact physique direct entre elles ; et
e) un électrolyte non aqueux activant l'anode et la cathode logées à l'intérieur du boîtier ;
dans laquelle le collecteur de courant d'anode est une bande de métal ayant une longueur s'étendant à une extrémité proximale et une extrémité distale avec son extrémité proximale en contact par le corps de lithium et son extrémité distale électriquement raccordée à une borne d'anode ; le corps de lithium a un bord supérieur et un bord inférieur séparé, les deux s'étendant et se rencontrant avec les bords droit et gauche définissant une largeur d'anode ; une largeur de la bande de métal est d'environ 1 % à 20 % de la largeur de l'anode mesurée à partir du bord droit jusqu'au bord gauche de celle-ci ; et la bande de métal s'étend dans le corps de lithium environ de 2 % à environ 100 % de sa hauteur mesurée à partir du bord supérieur jusqu'au bord inférieur de celle-ci.

2. Cellule électrochimique selon la revendication 1, dans laquelle le corps de lithium n'est pas en contact avec une paroi latérale de boîtier.

3. Cellule électrochimique selon la revendication 1 ou 2, dans laquelle la bande de métal a une largeur généralement uniforme le long de sa longueur à partir de l'extrémité proximale jusqu'à l'extrémité distale de celle-ci.

4. Cellule électrochimique selon l'une quelconque des revendications 1 à 3, dans laquelle la bande de métal a soit une extrémité de forme triangulaire ou circulaire.

5. Cellule électrochimique selon l'une quelconque des revendications 1 à 4, dans laquelle le boîtier est la borne d'anode.

6. Cellule électrochimique selon l'une quelconque des revendications 1 à 5, dans laquelle le lithium est fourni dans un rapport de capacité anode sur cathode (rapport A/C) supérieur à environ 1.2 sur la base d'une quantité de gramme du matériau d'anode actif sur le matériau de cathode actif.

7. Cellule électrochimique selon la revendication 6, dans laquelle le rapport A/C est jusqu'à environ 5.

8. Cellule électrochimique selon l'une quelconque des revendications 1 à 7, dans laquelle le matériau de cathode actif est sélectionné à partir du groupe se composant d'oxyde de vanadium argent (SVO), d'oxyde de vanadium cuivre argent (CSVO), de V₂O₅, MnO₂, CuO₂, TiS₂, Cu₂S, FeS, FeS₂, d'oxyde de vanadium de cuivre, CFₓ, Ag₂O, Ag₂O₂, CuF, LiCoO₂, LiNiO₂, LiMnO₂, Ag₂CrO₄, et des mélanges de ceux-ci.

9. Cellule électrochimique selon la revendication 1, dans laquelle la cathode est d'un premier matériau de cathode actif ayant une densité d'énergie relativement faible mais une capacité de débit relativement élevée en contact avec un côté d'un collecteur de courant de cathode et avec un second matériau de cathode actif ayant une densité d'énergie relativement élevée mais une capacité de débit relativement faible en contact avec l'autre côté du collecteur de courant de cathode, dans laquelle le lithium est fourni dans un rapport de capacité d'anode sur cathode (rapport A/C) supérieur à environ 1.2 sur la base d'une quantité de gramme du matériau d'anode actif sur les quantités de gramme totales des premier et second matériaux de cathode actif.

10. Cellule électrochimique selon la revendication 9, dans laquelle le second matériau de cathode actif est en regard de l'anode.

11. Cellule électrochimique selon la revendication 9 ou 10, dans laquelle le corps de lithium n'est pas en contact avec une paroi latérale de boîtier.

12. Cellule électrochimique selon l'une quelconque des revendications 9 à 11, dans laquelle le rapport A/C est jusqu'à environ 5.

13. Cellule électrochimique selon l'une quelconque des revendications 9 à 12, dans laquelle l'anode et la cathode sont associées électrochimiquement l'une à l'autre dans une configuration de : anode/[séparateur/cathode/séparateur/anode]ₙ, dans laquelle n ≥ 1.

14. Cellule électrochimique selon l'une quelconque des revendications 9 à 13, dans laquelle une paroi latérale de boîtier sert comme collecteur de courant d'anode pour un assemblage d'électrode ayant une configuration de : paroi latérale de boîtier/lithium/séparateur/cathode/lithium/paroi latérale de boîtier.

15. Cellule électrochimique selon l'une quelconque des revendications 9 à 14, dans laquelle le premier matériau de cathode actif est sélectionné à partir du groupe se composant d'oxyde de vanadium argent (SVO), d'oxyde de vanadium argent cuivre (CSVO), V₂O₅, MnO₂, LiCoO₂, LiNiO₂, LiMnO₂, CuO₂, TiS₂, Cu₂S, FeS, FeS₂, d'oxyde de cuivre, d'oxyde de vanadium cuivre, et des mélanges de ceux-ci, et le second matériau de cathode actif est sélectionné à partir du groupe se composant de CFₓ, Ag₂O, Ag₂O₂, CuF, Ag₂CrO₄, MnO₂, SVO, et des mélanges de ceux-ci.

16. Cellule électrochimique selon l'une quelconque des revendications 9 à 15, dans laquelle la cathode a la configuration : SVO/collecteur de courant/CFₓ, avec le CFₓ en regard de l'anode.

17. Cellule électrochimique selon l'une quelconque des revendications 9 à 15, dans laquelle la cathode a la configuration : SVO/collecteur de courant/SVO/CFₓ, avec CFₓ en regard de l'anode.

18. Cellule électrochimique selon l'une quelconque des revendications 9 à 15, dans laquelle la cathode a la configuration : CFₓ/SVO/collecteur de courant/SVO/CFₓ.

19. Cellule électrochimique selon la revendication 1, dans laquelle le corps de lithium n'est pas en contact avec une paroi latérale de boîtier, et dans laquelle la cathode est de SVO comme premier matériau de cathode actif en contact avec un côté d'un collecteur de courant de cathode et CFₓ comme second matériau de cathode actif en contact avec le côté opposé du collecteur de courant de cathode et en regard de l'anode, dans laquelle l'anode est fournie dans une configuration sélectionnée à partir du groupe se composant de :
i) SVO/collecteur de courant/CFₓ ;
ii) SVO/collecteur de courant/SVO/CFₓ ;
iii) CFₓ/SVO/collecteur de courant/SVO/CFₓ ; et
iv) SVO/CFₓ/collecteur de courant/CFₓ/SVO.

20. Cellule électrochimique selon la revendication 19, dans laquelle le collecteur de courant de cathode est sélectionné à partir du groupe se composant d'acier inoxydable, de titane, de tantale, de platine, d'or, d'aluminium, d'alliages de nickel cobalt, d'acier inoxydable ferrique hautement alliagé contenant du molybdène et du chrome, et des alliages contenant du nickel, chrome, et molybdène.

21. Cellule électrochimique selon la revendication 19 ou 20, dans laquelle le collecteur de courant de cathode est du titane ayant un revêtement sélectionné à partir du groupe se composant de matériau graphite/carbone, d'iridium, d'oxyde d'iridium et de platine placés sur celui-ci.

22. Cellule électrochimique selon l'une quelconque des revendications 19 à 21, dans laquelle l'électrolyte a un premier solvant sélectionné à partir du groupe se composant de tétrahydrofurane, acétate de méthyle, diglyme, triglyme, tétraglyme, carbonate de diméthyle, diméthoxyéthane-1,2, diéthoxyéthane-1.2, méthoxyéthane-2-éthoxy-1, carbonate d'éthylméthyle, carbonate de méthylpropyle, carbonate d'éthylpropyle, carbonate de diethyle, carbonate de dipropyle, et des mélanges de ceux-ci, et un second solvant sélectionné à partir du groupe se composant de carbonate de propylène, carbonate d'éthylène, carbonate de butylène, nitrile acétone, sulfoxide diméthyle, formamide diméthyle, acétamide diméthyle, valérolactone-γ, butyrolactone- y, N-méthyl-pyrrolidinone, et des mélanges de ceux-ci.

23. Cellule électrochimique selon l'une quelconque des revendications 19 à 22, dans laquelle l'électrolyte comprend un sel de lithium sélectionné à partir du groupe se composant de LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆F₅SO₃, LiO₂CCF₃, LiSO₆F, LiB(C₆H₅)₄, LiCF₃SO₃, et des mélanges de ceux-ci.

24. Dispositif médical implantable, qui comprend :
a) un boîtier ;
b) un circuit de commande contenu à l'intérieur du boîtier pour commander le fonctionnement du dispositif médical ; et
c) une cellule électrochimique contenue à l'intérieur du boîtier pour alimenter le circuit de commande, la cellule comprenant :
i) un boîtier ;
ii) une anode comprenant un corps de lithium comme matériau d'anode actif en contact avec un collecteur de courant d'anode dépourvu d'une structure de type écran et dans laquelle le corps de lithium n'est pas en contact avec une paroi latérale de boîtier ;
iii) une cathode d'un premier matériau de cathode actif ayant une densité d'énergie relativement faible mais une capacité de débit relativement élevée en contact avec un côté d'un collecteur de courant de cathode et avec un second matériau de cathode actif ayant une densité d'énergie relativement élevée mais une capacité de débit relativement faible en contact avec le côté opposé du collecteur de courant de cathode, et dans laquelle le second matériau de cathode actif est en regard de l' anode ; et
iv) un électrolyte non aqueux activant l'anode et la cathode contenues à l'intérieur du boîtier ;
dans lequel le collecteur de courant d'anode est une bande de métal ayant une longueur s'étendant à une extrémité proximale et une extrémité distale avec son extrémité proximale en contact avec le corps de lithium et son extrémité distale électriquement raccordée à une borne d'anode ; le corps de lithium a un bord supérieur et un bord inférieur séparé, les deux s'étendant et se rencontrant avec des bords droit et gauche définissant une largeur d'anode ; une largeur de la bande de métal est d'environ 1 % à 20 % de la largeur d'anode mesurée à partir du bord droit jusqu'au bord gauche de celle-ci ; et la bande de métal s'étend dans le corps de lithium environ de 2 % à environ 100 % de sa hauteur mesurée à partir du bord supérieur jusqu'au bord inférieur de celui-ci.

25. Dispositif médical selon la revendication 24, dans lequel le premier matériau de cathode actif est sélectionné à partir du groupe se composant de SVO, CSVO, V₂O₅, MnO₂, LiCoO₂, LiNiO₂, LiMnO₂, CuO₂, TiS₂, Cu₂S, FeS, FeS₂, d'oxyde de cuivre, d'oxyde de vanadium cuivre, et des mélanges de ceux-ci.

26. Dispositif médical selon la revendication 24 ou 25, dans lequel le second matériau de cathode actif est sélectionné à partir du groupe se composant de CFₓ, Ag₂O, CuF, Ag₂CrO₄, MnO₂, et des mélanges de ceux-ci.

27. Dispositif médical selon l'une quelconque des revendications 24 à 26, dans lequel la cathode a une configuration sélectionnée à partir du groupe se composant de : SVO/collecteur de courant/CFₓ, SVO/collecteur de courant/SVO/CFₓ, et CFₓ/SVO/collecteur de courant/SVO/CFₓ, avec le CFₓ en regard de l'anode de lithium.

28. Dispositif médical selon l'une quelconque des revendications 24 à 27, sélectionné à partir du groupe se composant d'un pacemaker cardiaque, d'un défibrillateur, d'un neurostimulateur, d'une pompe de médicament, d'un dispositif d'assistance auditive, et d'un dispositif de croissance osseuse.

29. Procédé pour fournir une cellule électrochimique, comprenant les étapes de :
a) fourniture d'un boîtier ;
b) fourniture d'une anode comprenant un corps de lithium comme matériau d'anode actif en contact avec un collecteur de courant d'anode dépourvu d'une structure de type écran ;
c) fourniture d'une cathode d'un matériau de cathode actif ;
d) disposition d'un séparateur entre l'anode et la cathode pour empêcher un contact physique direct entre eux ; et
e) activation de l'anode et de la cathode logées à l'intérieur du boîtier avec un électrolyte non aqueux et avec le corps de lithium sans contact avec une paroi latérale de boîtier ;
dans lequel le collecteur de courant d'anode est une bande de métal ayant une largeur s'étendant jusqu'à une extrémité proximale et une extrémité distale avec son extrémité proximale en contact par le corps de lithium et son extrémité distale électriquement raccordée à une borne d'anode ; le corps de lithium a un bord supérieur et un bord inférieur séparé, les deux s'étendant et se rencontrant avec les bords droit et gauche définissant une largeur d'anode ; une largeur de la bande de métal est environ de 1 % à 20 % de la largeur d'anode mesurée à partir de son bord droit jusqu'à son bord gauche de celle-ci ; et la bande de métal s'étend dans le corps de lithium à partir de 2 % à environ 100 % de sa hauteur mesurée à partir du bord supérieur jusqu'au bord inférieur de celle-ci.

30. Procédé selon la revendication 29, comprenant la fourniture du collecteur de courant d'anode comme bande de métal ayant une largeur s'étendant jusqu'à une extrémité proximale et une extrémité distale et en contact avec l'extrémité proximale du corps de lithium et connecté électriquement à l'extrémité distale du boîtier servant de borne d'anode

31. Procédé selon la revendication 29 ou 30, comprenant la fourniture du lithium dans un rapport de capacité anode sur cathode (rapport A/C) supérieur à environ 1.2 sur la base d'une quantité de gramme du matériau d'anode actif sur le matériau de cathode actif.

32. Procédé selon l'une des revendications 29 à 31, comprenant la sélection du matériau de cathode actif à partir du groupe se composant d'oxyde de vanadium argent (SVO), d'oxyde de vanadium cuivre argent (CSVO), de V₂O₅, MnO₂, CuO₂, TiS₂, Cu₂S, FeS, FeS₂, d'oxyde de vanadium de cuivre, CFₓ, Ag₂O, Ag₂O₂, CuF, LiCoO₂, LiNiO₂, LiMnO₂, Ag₂CrO₄, et des mélanges de ceux-ci.

33. Procédé pour fournir une cellule électrochimique, comprenant les étapes de:
a) fourniture d'un boîtier ;
b) fourniture d'une anode comprenant un corps de lithium comme matériau d'anode actif en contact avec un collecteur de courant d'anode dépourvu d'une structure de type écran;
c) la fourniture d'une cathode par mise en contact d'un premier matériau de cathode actif ayant une densité d'énergie relativement faible mais une capacité de débit relativement élevée d'un côté d'un collecteur de courant de cathode avec un second matériau de cathode actif ayant une densité d'énergie relativement élevée mais une capacité de débit relativement faible du côté opposé du collecteur de courant de cathode, et la fourniture du lithium dans un rapport de capacité anode sur cathode (rapport A/C) supérieur à environ 1.2 sur la base d'une quantité de gramme du matériau d'anode actif sur les premier et deuxième matériaux de cathode actif ;
d) la disposition d'un séparateur entre l'anode et la cathode pour empêcher un contact physique direct entre elles; et
e) l'activation de l'anode et de la cathode contenues à l'intérieur du boîtier avec un électrolyte non aqueux;
dans lequel le collecteur de courant d'anode est une bande de métal ayant une longueur s'étendant à une extrémité proximale et une extrémité distale avec son extrémité proximale en contact avec le corps de lithium et son extrémité distale électriquement raccordée à une borne d'anode ; le corps de lithium a un bord supérieur et un bord inférieur séparé, les deux s'étendant et se rencontrant avec des bords droit et gauche définissant une largeur d'anode ; une largeur de la bande de métal est d'environ 1 % à 20 % de la largeur d'anode mesurée à partir du bord droit jusqu'au bord gauche de celle-ci ; et la bande de métal s'étend dans le corps de lithium environ de 2 % à environ 100 % de sa hauteur mesurée à partir du bord supérieur jusqu'au bord inférieur de celui-ci.

34. Procédé selon la revendication 33 comprenant l'association électriquement de l'anode et de la cathode l'une avec l'autre dans une configuration de : anode/[séparateur/cathode/séparateur/anode]ₙ, dans laquelle n ≥ 1.

35. Procédé selon la revendication 29, comprenant la fourniture de la cathode en contact de SVO comme premier matériau de cathode actif jusqu'à un côté d'un collecteur de courant de cathode et CFₓ comme second matériau de cathode actif jusqu'au bord opposé du collecteur de courant de cathode et en regard de l'anode, dans lequel la cathode est placée dans une configuration sélectionnée à partir du groupe se composant de :
i) SVO/collecteur de courant/CFₓ ;
ii) SVO/collecteur de courant/SVO/CFₓ ;
iii) CFₓ/SVO/collecteur de courant/SVO/CFₓ ; et
iv) SVO/CFₓ/collecteur de courant/CFₓ/SVO.
